# EUROPEAN PATENT APPLICATION

(11) **EP 4 503 592 A1**
(43) Date of publication of application: **05.02.2025**
(21) Application number: 22935797.5
(22) Date of filing: 29.03.2022
(51) Int. Cl.: H04N 5/272, H04N 21/431, H04N 21/472, H04N 21/81

(54) **DISPLAY DEVICE**

(71) Applicant: LG Electronics Inc., Yeongdeungpo-gu Seoul 07336 (KR)
(72) Inventor: LEE, Jaekyung, Seoul 06772 (KR)
(74) Representative: Schornack, Oliver
(86) International application number: PCT/KR2022/004378
(87) International publication number: WO 2023/191121

(57) **Abstract**

A display device according to an embodiment of the present disclosure may comprise a controller which acquires a user content associated with a displayed content and provides same. The display device according to an embodiment of the present disclosure may comprise: a display which displays a first content; and a controller which acquires at least one piece of first information associated with a background or object of the first content displayed on the display, acquires a first user content including the background or object associated with the first information, and displays the acquired first user content on the display.

## Description

### [Technical Field]

The present disclosure relates to a display device and a method for driving the same.

The present disclosure relates to a display device that provides broadcast content and user content associated with broadcast content, and a method for driving the same.

### [Background Art]

Recently, technologies that combine virtual and reality, such as Metaverse, are being developed. There are many cases where personal experiences are provided non-face-to-face and virtually.

As recognition technology develops, if a user wants to know food, actors, places, or the like that appear in a broadcast program aired on a display device, the user may request the provision of information about the food, place, actor, or the like through utterances. Through utterance such as "What is that food?", "Where is that place?", "Who is that actor?", the user may request the provision of information about food, places, actors, or the like exposed in broadcast programs or the like. The display device may recognize the user's request through recognition of the user's utterance, obtain the relevant information, and provide the relevant information to the user.

In a virtual experience platform implemented through Metaverse or the like, users may experience moving inside a virtual space using another character (or avatar) in the virtual space as a medium.

Various research is being attempted to provide new user experiences in display devices by utilizing recognition technologies such as artificial intelligence and virtual experience platform technologies such as Metaverse.

### [Disclosure]

### [Technical Problem]

The present disclosure provides a display device that may provide a new user experience by obtaining content and user content associated with the content and a method for driving the same.

The present disclosure provides a display device that may provide a new user experience by obtaining and displaying user content associated with broadcast content and a method for driving the same.

The present disclosure provides a display device that may obtain and provide broadcast content associated with user content and a method for driving the same.

The present disclosure provides a display device capable of obtaining broadcast content and user content associated with the broadcast content, and combining and displaying the broadcast content and the obtained user content, and a method for driving the same.

The present disclosure provides a display device that may provide a new user experience by connecting a virtual experience platform associated with broadcast content or user content and a method for driving the same.

### [Technical Solution]

A display device according to an embodiment of the present disclosure may include a controller that obtains and provides user content associated with displayed content.

A display device according to an embodiment of the present disclosure may include a controller that obtains and provides user content associated with broadcast content.

A display device according to an embodiment of the present disclosure may include a controller that obtains and provides broadcast content associated with user content.

A display device according to an embodiment of the present disclosure may include a controller that can connect and provide a virtual experience platform associated with broadcast content or user content.

A display device according to an embodiment of the present disclosure may include a display unit configured to display first content; and a controller configured to obtain at least one first information associated with a background or object of the first content displayed on the display unit, obtain first user content including a background or object associated with the first information, and display the obtained first user content on the display unit.

According to a display device according to an embodiment of the present disclosure, the first user content may include at least one of content stored by the user, content created by the user, or content stored by the user as an object.

According to a display device according to an embodiment of the present disclosure, the first user content may include at least one of a photo, a video, or schedule information.

A display device according to an embodiment of the present disclosure may further include a database storing the first user content.

According to a display device according to an embodiment of the present disclosure, the display unit may include a first area and a second area, the first content may be displayed in the first area, and the first user content may be displayed in the second area.

According to a display device according to an embodiment of the present disclosure, the first content may include at least one of broadcast content including a photo, a movie, or a broadcast program.

According to a display device according to an embodiment of the present disclosure, the first information associated with the background or object of the first content may include at least one of area information included in the first content, building information included in the first content, food information included in the first content, matter information including in the first content, or person information included in the first content.

According to a display device according to an embodiment of the present disclosure, the controller may combine the first content and the first user content and display the combined content on the display unit.

According to a display device according to an embodiment of the present disclosure, the controller may obtain a first object included in the first user content, combine the first object into the first content, and display the combined first object and the first content on the display unit.

According to a display device according to an embodiment of the present disclosure, the controller may store content in which the first object and the first content are combined.

According to a display device according to an embodiment of the present disclosure, the controller may obtain background information of the first content and obtain and provide a list of virtual experience platforms that provide virtual experiences of places associated with the background information.

According to a display device according to an embodiment of the present disclosure, the controller may connect to at least one virtual experience platform among the list of virtual experience platforms to provide a virtual experience environment to the user.

According to a display device according to an embodiment of the present disclosure, the controller may obtain at least one second information associated with a background or object of second user content, obtain second content including a background or object associated with the second information, and display the second content on the display unit.

According to a display device according to an embodiment of the present disclosure, the second content may include at least one of broadcast content including a photo, a movie, or a broadcast program.

According to a display device according to an embodiment of the present disclosure, the controller may obtain third user content including a background or object associated with the second information and display the third user content on the display unit.

According to a display device according to an embodiment of the present disclosure, the third content may include at least one of content stored by the user, content created by the user, or content stored as an object by the user.

According to a display device according to an embodiment of the present disclosure, the controller may combine the second content and the second user content and display the combined second content and second user content on the display unit.

According to a display device according to an embodiment of the present disclosure, the controller may obtain a second object included in the second user content, combine the second object into the second content, and display the combined second object and second content on the display unit.

According to a display device according to an embodiment of the present disclosure, the controller may store content in which the second object and the second content are combined.

According to a display device according to an embodiment of the present disclosure, the controller may obtain background information of the second content and connects to a virtual experience platform that provides a virtual experience of a place associated with the background information to provide a virtual experience environment to the user.

A method of driving a display device according to an embodiment of the present disclosure may obtain at least one first information associated with a background or object of first content displayed on a display unit, obtain first user content including a background or object associated with the first information, and display the obtained first user content on the display unit.

A method of driving a display device according to an embodiment of the present disclosure may obtain at least one second information associated with a background or object of second user content displayed on a display unit, obtain second content including a background or object associated with the second information, and display the second content on the display unit.

A method of driving a display device according to an embodiment of the present disclosure may obtain at least one first information associated with a background or object of first content displayed on a display unit, obtain first user content including a background or object associated with the first information, combine the first content and the first user content, and display the combined first content and first user content on the display unit.

A method of driving a display device according to an embodiment of the present disclosure may obtain background information of first content displayed on a display unit, connect to a virtual experience platform that provides a virtual experience of a place associated with the background information, and provide a virtual experience environment to a user.

A method of driving a display device according to an embodiment of the present disclosure may obtain background information of user content displayed on a display unit, connect to a virtual experience platform that provides a virtual experience of a place associated with the background information, and provide a virtual experience environment to the user.

### [Advantageous Effect]

According to the display device and the method for driving the same according to various embodiments of the present disclosure, a new user experience may be provided by obtaining content and user content associated with the content.

According to the display device and the method for driving the same according to various embodiments of the present disclosure, a new user experience may be provided by obtaining and displaying user content associated with broadcast content.

According to the display device and the method for driving the same according to various embodiments of the present disclosure, a new user experience may be provided by obtaining and providing broadcast content associated with user content.

According to the display device and the method for driving the same according to various embodiments of the present disclosure, broadcast content and user content associated with to the broadcast content may be obtained, the broadcast content and the obtained user content may be synthesized and displayed, and a new user experience may be provided.

According to the display device and the method for driving the same according to various embodiments of the present disclosure, a new user experience may be provided by connecting a virtual experience platform associated with broadcast content or user content.

### [Description of Drawings]

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure.
Fig. 4 is a view illustrating an example of utilizing a remote control device according to an embodiment of the present disclosure.
Fig. 5 is a flowchart explaining a method of driving a display device according to an embodiment of the present disclosure.
Fig. 6 is a view illustrating an example of broadcast content displayed on a display device according to an embodiment of the present disclosure.
Fig. 7 is a view illustrating examples of broadcast content and user content displayed on a display device according to an embodiment of the present disclosure.
Fig. 8 is a view illustrating another example of broadcast content and user content displayed on a display device according to an embodiment of the present disclosure.
Fig. 9 is a view illustrating another example of broadcast content and user content displayed on a display device according to an embodiment of the present disclosure.
Fig. 10 is a view illustrating an example of broadcast content displayed on a display device according to an embodiment of the present disclosure.
Fig. 11 is a view illustrating examples of broadcast content and user content displayed on a display device according to an embodiment of the present disclosure.
Fig. 12 is a view illustrating an example in which broadcast content and user content are combined and displayed in a display device according to an embodiment of the present disclosure.
Fig. 13 is a flowchart illustrating another example of a method of driving a display device according to an embodiment of the present disclosure.
Fig. 14 is a view illustrating an example of user content displayed on a display device according to an embodiment of the present disclosure.
Fig. 15 is a view illustrating examples of user content and broadcast content displayed on a display device according to an embodiment of the present disclosure.
Fig. 16 is a view illustrating another example of user content and broadcast content displayed on a display device according to an embodiment of the present disclosure.
Fig. 17 is a view illustrating another example of a method of driving a display device according to an embodiment of the present disclosure.

### [Best Mode]

Hereinafter, embodiments relating to the present disclosure will be described in detail with reference to the accompanying drawings. The suffixes "interface", "module" and "unit" for components used in the description below are assigned or mixed in consideration of easiness in writing the specification and do not have distinctive meanings or roles by themselves.

A display device according to an embodiment of the present disclosure, for example, as an artificial display device that adds a computer supporting function to a broadcast receiving function, can have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS can be used.

Accordingly, since various applications are freely added or deleted on a general purpose OS kernel, a display device described herein, for example, can perform various user-friendly functions. The display device, in more detail, can be a network TV, Hybrid Broadcast Broadband TV (HBBTV), smart TV, light-emitting diode (LED) TV, organic light-emitting diode (OLED) TV, and so on and in some cases, can be applied to a smartphone.

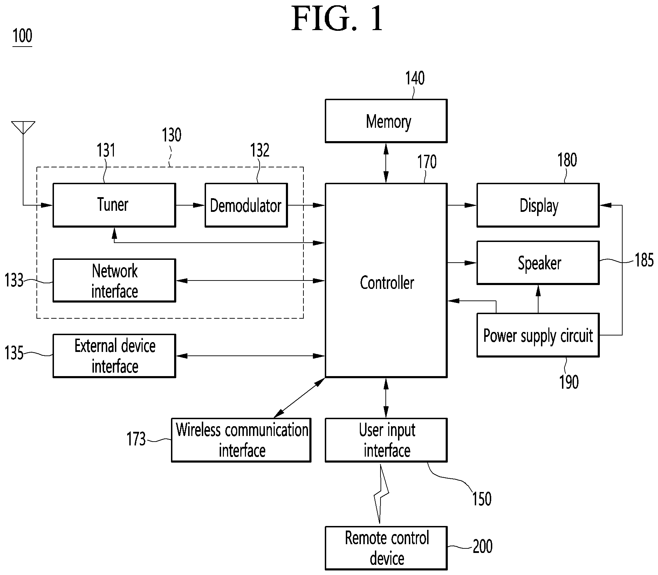

Fig. 1 is a block diagram illustrating a configuration of a display device according to an embodiment of the present disclosure.

Referring to Fig. 1, a display device 100 may include a broadcast reception module 130, an external device interface unit 135, a storage unit 140, a user input unit 150, a control unit 170, a wireless communication interface unit 173, a display unit 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The external device interface unit 135 may receive an application or an application list in an adjacent external device and deliver the application or the application list to the control unit 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface unit 133 may access a predetermined webpage through an accessed network or another network linked to the accessed network. That is, the network interface unit 133 may transmit or receive data to or from a corresponding server by accessing a predetermined webpage through the network.

The network interface unit 133 may receive content or data provided from a content provider or a network operator. That is, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The storage unit 140 may store signal-processed image, voice, or data signals stored by a program in order for each signal processing and control in the control unit 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control unit 170, or may transmit signals from the control unit 170 to a user. For example, the user input unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 may transmit, to the control unit 170, control signals input from local keys (not shown) such as a power key, a channel key, a volume key, and a setting key.

Image signals that are image-processed by the control unit 170 may be input to the display unit 180 and displayed as images corresponding to the image signals. In addition, image signals that are image-processed by the control unit 170 may be input to an external output device through the external device interface unit 135.

Voice signals processed by the control unit 170 may be output to the audio output unit 185. In addition, voice signals processed by the control unit 170 may be input to the external output device through the external device interface unit 135.

Additionally, the control unit 170 may control overall operations of the display device 100.

In addition, the control unit 170 may control the display device 100 by a user command or an internal program input through the user input unit 150, and may access the network to download a desired application or application list into the display device 100.

The control unit 170 may output channel information selected by a user together with the processed image or voice signals through the display unit 180 or the audio output unit 185.

In addition, the control unit 170 may output image signals or voice signals of an external device such as a camera or a camcorder, which are input through the external device interface unit 135, through the display unit 180 or the audio output unit 185, according to an external device image playback command received through the user input unit 150.

Moreover, the control unit 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the control unit 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100.

Furthermore, if the detected wearable device is a device authenticated to communicate with the display device 100, the control unit 170 may transmit at least part of data processed in the display device 100 to the wearable device through the wireless communication unit 173. Therefore, a user of the wearable device may use the data processed by the display device 100 through the wearable device.

The display unit 180 may convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display unit 180 and the audio output unit 185.

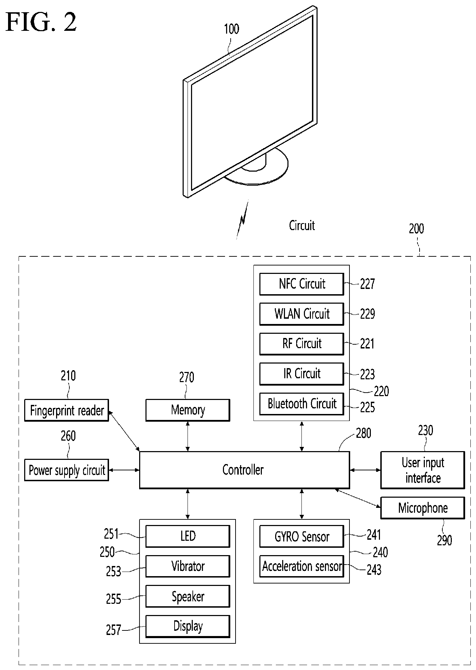

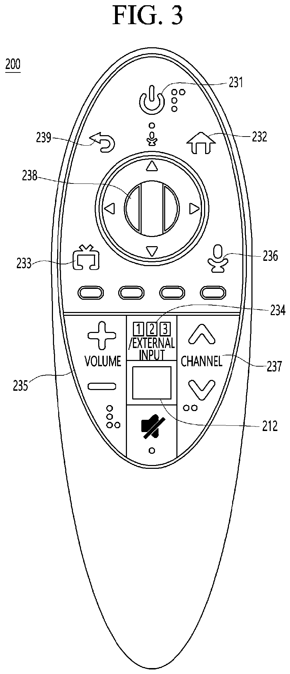

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to Fig. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume control button 235 may be a button for controlling a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display unit 180 of the display device 100.

The output unit 250 may output image or voice signals in response to the operation of the user input unit 230, or may output image or voice signals corresponding to signals transmitted from the display device 100.

A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced.

The power supply unit 260 may resume the supply of power if a predetermined key provided at the remote control device 200 is operated.

The storage unit 270 may store various kinds of programs and application data required to control or operate the remote control device 200.

If the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to the control of the remote control device 200. The control unit 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may obtain voice.

A plurality of sound acquisition units 290 may be provided.

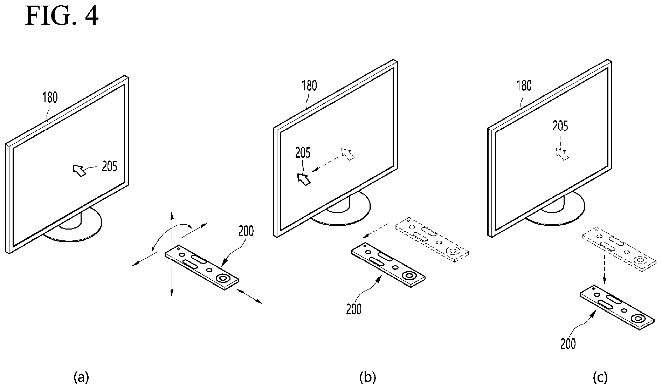

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

A user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display unit 180. Thus, a selected region in the display unit 180 corresponding to the pointer 205 may be zoomed in and displayed in an enlarged size.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a vertical or horizontal movement may be excluded. That is, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

The display device and the method of driving a display device according to an embodiment of the present disclosure may provide a new user experience by obtaining content and user content associated with the content.

The display device and the method of driving a display device according to an embodiment of the present disclosure may provide a new user experience by obtaining and displaying user content associated with broadcast content.

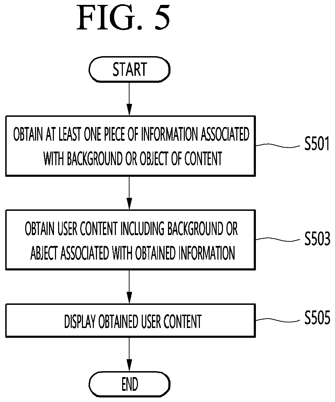

Fig. 5 is a flowchart explaining a method of driving a display device according to an embodiment of the present disclosure.

The display device 100 according to an embodiment of the present disclosure may include a controller 170 and a display unit 180.

The display unit 180 may display content. For example, the display unit 180 may display at least one content among broadcast content including photos, movies, or broadcast programs. The display unit 180 may display content through a web application in a networking environment.

The controller 170 may obtain at least one piece of information associated with the background or object of content displayed on the display unit 180 (S501).

The controller 170 may obtain the background of content displayed on the display unit 180 and obtain information associated with the background.

Information associated with the background of the content may be obtained from image recognition of the content, meta information of the content, or the like. Information associated with the background of the content may include information such as the area where the content was filmed (country, city, location information, coordinate information, or the like), the place where the content was filmed (tourist attractions, restaurants, cafes, parks, schools, museums, or the like), and the time when the content was filmed.

The controller 170 may obtain an object of content displayed on the display unit 180 and obtain information associated with the object.

Information associated with the object of the content may be obtained from image recognition of the content or meta information of the content. Information associated with objects in the content may include information such as person included in the content (users, actors, celebrities, or the like), animals included in the content, plants included in the content, food included in the content, sculptures included in the content, and buildings included in the content, and matters included in the content.

The controller 170 may obtain information associated with the background of the content or information associated with the object of the content in real time for the content displayed on the display unit 180. When the background of content displayed on the display unit 180 changes, the controller 170 may obtain information associated with the new background in real time without a user's request. When the object of content displayed on the display unit 180 changes, the controller 170 may obtain information associated with the new object in real time without a user's request.

Additionally, the controller 170 may obtain information associated with the background of the content displayed on the display unit 180 or information associated with the object of the content at the user's request. For example, the controller 170 may recognize a user's utterance and obtain information associated with the background of the content displayed on the display unit 180 or information associated with the object of the content.

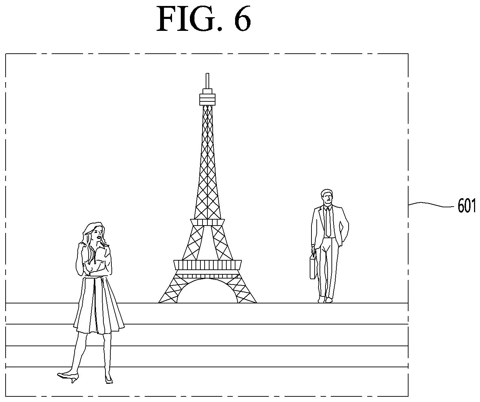

For example, broadcast content including the image 601 shown in Fig. 6 may be displayed on the display unit 180. The case where the image 601 shown in Fig. 6 is part of broadcast content filmed with the Eiffel Tower in Paris, France as the background will be described as an example.

In the content shown in Fig. 6, the controller 170 may obtain background information such as "France" and "Paris." The controller 170 may obtain object information such as "tower" or "Eiffel Tower." The controller 170 may obtain person information as one of object information. If the object included in the image 601 shown in Fig. 6 is a famous actor or a famous person, the controller 170 may obtain information such as the name of the actor or the person.

According to an embodiment of the present disclosure, the controller 170 may obtain user content including a background associated with the obtained information or user content including an object associated with the obtained information (S503).

As an example, the controller 170 may obtain user content including a background associated with background information obtained from content displayed on the display unit 180. The controller 170 may obtain user content including an object associated with object information obtained from content displayed on the display unit 180.

User content may include at least one of content stored by the user, content created by the user, or content stored as an object by the user. User content may include at least one of photos, videos, or schedule information.

User content may be stored inside the display device 100. The display device 100 may include a database in which user content is stored. User content may be obtained from the internal memory or database of the display device 100.

User content may be obtained from an external server that may be connected to the display device 100. User content may be obtained from social networking services such as Instagram and Facebook.

The controller 170 may obtain user content in real time based on background information or object information obtained from content displayed on the display unit 180.

Based on the background information of the obtained content, the controller 170 may obtain user content including a background associated with the obtained background information in real time, even without a user's request. Based on the object information of the obtained content, the controller 170 may obtain user content including an object associated with the obtained object information in real time, even without a user's request.

Additionally, the controller 170 may obtain user content including a background associated with the obtained background information based on the background information of the obtained content at the user's request. The controller 170 may obtain user content including an object associated with the obtained object information based on the object information of the obtained content at the user's request.

For example, the controller 170 may recognize the user's utterance and obtain user content including a background associated with the background information of the content output on the display unit 180 or user content including an object associated with the object information of the content output on the display unit 180.

According to an embodiment, the controller 170 may display the obtained user content on the display unit 180 (S505).

For example, when broadcast content including the image 601 shown in Fig. 6 is displayed on the display unit 180, there may be utterances from the user such as "Where is it?", "When did I go there?", "Find my memories", or the like.

The controller 170 may recognize the user's utterance and perform response processing to the user's request. The controller 170 may process a response with at least one of an audio signal or a subtitle signal.

For example, when the controller 170 recognizes the user's utterance of "Where is it?", the controller may process responses such as "This is Paris, France" or "This is the Eiffel Tower in Paris."

After recognizing the user's utterance, the controller 170 may obtain background information or object information of content displayed on the display unit 180. For example, the controller 170 may process responses such as "This is Paris, France" or "This is the Eiffel Tower in Paris" based on the background information or object information of the content displayed on the display unit 180 as at least one of an audio signal or a subtitle signal.

Additionally, the controller 170 may obtain background information or object information of content displayed on the display unit 180 in advance before the user's utterance. In this way, when the background information or object information of the content is obtained in advance, the controller 170 may recognize the user's utterance and respond more quickly and accurately to the user request.

For example, when the controller 170 recognizes the user's utterance of "When did I go there?", the controller 170 may obtain background information or object information of content displayed on the display unit 180. Additionally, the controller 170 has to also obtain information about user content in order to process a response to the user's request.

The controller 170 may process the response, for examples, "I went last summer" or "I went to Paris last summer" or the like based on information obtained from the user content as well as background information or object information of the content displayed on the display unit 180, The response of the controller 170 may be processed as at least one of an audio signal or a subtitle signal.

The controller 170 may obtain user content associated with background information or object information of the content displayed on the display unit 180 from the user content stored inside the display device 100 before or after the user's utterance, similar to what was described above.

In addition, the controller 170 may obtain user content associated with background information or object information about the content displayed on the display unit 180 from an external server that may be connected to the display device 100 before or after the user's utterance, similar to what was described above.

In addition, the controller 170 may obtain user content associated with background information or object information about the content displayed on the display unit 180 from social networking services such as Instagram and Facebook before or after the user's utterance, similar to what was described above.

User content may include at least one of content stored by the user, content created by the user, or content stored as an object by the user. User content may include at least one of photos, videos, or schedule information.

According to an embodiment of the present disclosure, the display device 100 may further include an artificial intelligence (AI) server that obtains or extracts user content. The controller 170 may receive user content from an artificial intelligence server. Additionally, the controller 170 may directly extract or obtain user content.

The artificial intelligence server may be provided outside the display device 100 and may be connected to the display device 100 through networking or the like. The artificial intelligence server may obtain user content from a database provided in the display device 100 before or after the user's utterance. The artificial intelligence server may obtain user content from an external server that may be connected to the display device 100 before or after the user's utterance. The artificial intelligence server may obtain user content from social networking services such as Instagram and Facebook before or after the user's utterance.

The artificial intelligence server may obtain user content and classify the user content into various background items based on the background information of the obtained user content. Based on the content included in the user content, one user content may be classified to belong to a plurality of background items.

The artificial intelligence server may obtain user content and classify the user content into various object items based on the object information of the obtained user content. Based on the content included in the user content, one user content may be classified to belong to a plurality of object items. The artificial intelligence server may classify user content into various items through learning about user content.

According to the embodiment, when the artificial intelligence server obtains user content before the user's utterance, the controller 170 may quickly respond to the user's request.

For example, when the controller 170 recognizes that there is an utterance of "Find my memories" from the user when the broadcast content shown in Fig. 6 is displayed on the display unit 180, the obtained User content may be displayed on the display unit 180.

The display unit 180 may include a first area 710 and a second area 720. For example, the broadcast content shown in Fig. 6 may be displayed in the first area 710, and the obtained user content may be displayed in the second area 720.

The size of the first area 710 and the size of the second area 720 may be set differently. A plurality of obtained user contents 721, 722, 723, 724, and 725 may be displayed in the second area 720.

For example, from the image 601 of broadcast content shown in Fig. 6, the controller 170 may obtain background information such as "France", "Paris", or the like. The controller 170 may obtain object information such as "tower", "Eiffel Tower", or the like.

When the controller 170 recognizes the user's utterance "Find my memories," the controller 170 may obtain user content including a background associated with background information such as "France" and "Paris." The controller 170 may obtain user content including objects associated with object information, such as "tower" and "Eiffel Tower." The controller 170 may obtain user content that includes a background associated with background information such as "France" and "Paris" and also includes an object associated with object information such as "Tower" and "Eiffel Tower." The controller 170 may assign a matching score indicating the degree of association with broadcast content to the obtained user content.

The controller 170 may display a plurality of user contents 721, 722, 723, 724, and 725 obtained through this process on the second area 720 of the display unit 180. For example, the controller 170 may display user content with a high matching score first on the display unit 180.

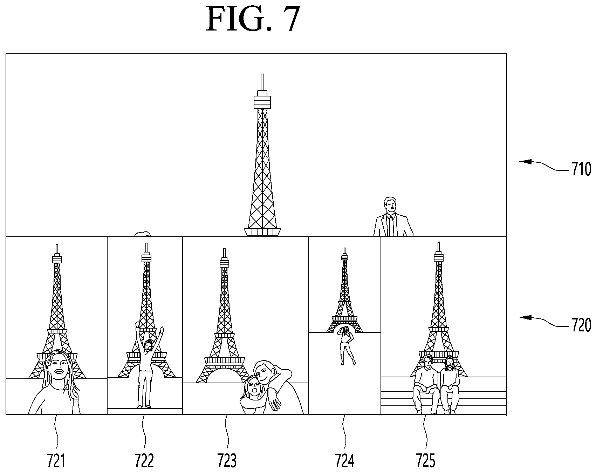

For example, when the controller 170 recognizes the user's utterance "Find my memories," the controller may output user content 721, 722, 723, 724, 725 obtained as shown in Fig. 7 with responses such as "I'll show you photos of Paris from your trip last summer."

Accordingly, users will be able to view photos taken in Paris last summer. Users will be able to enjoy user content that includes the Eiffel Tower in Paris as a background. Users will be able to view their travel photos or videos taken at the Eiffel Tower in Paris.

According to various embodiments of the present disclosure, a new user experience may be provided by obtaining and displaying user content associated with broadcast content.

According to various embodiments of the present disclosure, when a place he has traveled displays, a delicious meal ate displays, or a memory comes to mind, while the user is watching broadcast content, the controller 170 outputs the user content in connection with the broadcast content, and thus the user may have a new experience that may recall the user's good memories while watching the user content.

According to various embodiments of the present disclosure, when a specific area is recognized in broadcast content including a movie or broadcast program displayed on the display unit 180, the controller 170 may obtain user content associated with a specific area through the user's photo or a social networking service such as Instagram and may display them together by recalling nostalgic photos or videos obtained while displaying the screen of a movie or broadcast program.

The controller 170 may display broadcast content and obtained user content together on the display unit 180. Additionally, the controller 170 may not display broadcast content on the display unit 180 but only display obtained user content.

When specific user content is selected by the user, the controller 170 may enlarge and display the selected user content. The user may select specific user content by utterance or through the remote control device 200.

For example, when the first user content 721 is selected by the user, the controller 170 may display the first user content 721 on the entire area of the display unit 180. Additionally, when the first user content 721 is selected by the user, the controller 170 may enlarge and display the size of the first user content 721 while displaying the broadcast content.

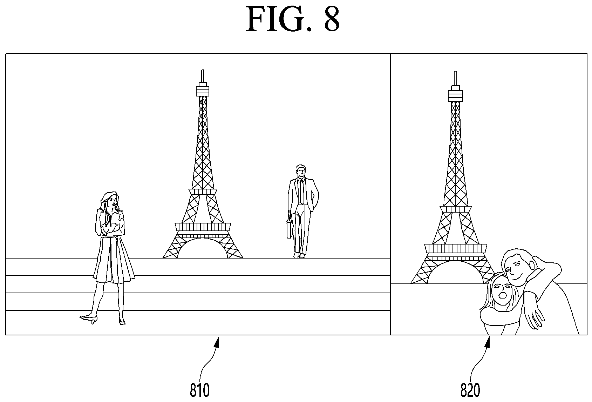

As another example, as shown in Fig. 8, the controller 170 may display broadcast content in the first area 810 which is one side of the display unit 180 and may also display selected user content in the second area 820 which is the other side of the display unit 180.

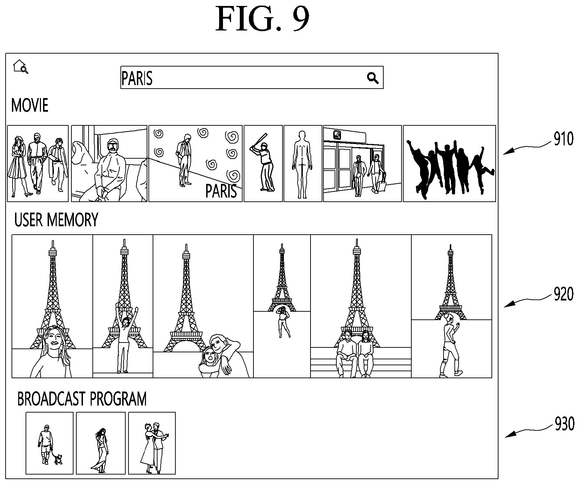

According to an embodiment of the present disclosure, according to a user request, as shown in Fig. 9, the controller 170 may display movie content associated with broadcast content in the first area 910, display user content associated with the broadcast content in the second area 920, and display other broadcast content associated with the broadcast content in the third area 930.

When the user selects specific content among the content shown in Fig. 9, the controller 170 may enlarge and display the corresponding content on the display unit 180.

According to various embodiments of the present disclosure, the display device 100 may display broadcast content and user content by combining them. Additionally, the display device 100 may store at least one of a photo or video combining broadcast content and user content.

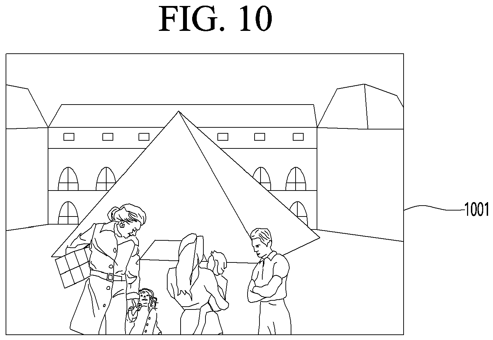

For example, a broadcast program including the image 1001 shown in Fig. 10 may be displayed on the display unit 180. Image 1001 shown in Fig. 10 is a scene from the movie "Midnight in Paris."

As described above, the controller 170 may obtain at least one piece of information associated with the background or object of broadcast content displayed on the display unit 180. The controller 170 may obtain the background of the movie displayed on the display unit 180 and obtain information associated with the background. The controller 170 may obtain an object of a movie displayed on the display unit 180 and obtain information associated with the object.

According to an embodiment of the present disclosure, the controller 170 may obtain user content including a background associated with the obtained information or user content including an object associated with the obtained information.

User content may include at least one of content stored by the user, content created by the user, or content stored as an object by the user. User content may include at least one of photos, videos, or schedule information.

For example, when the image 1001 shown in Fig. 10 is displayed on the display unit 180, there may be utterances from the user such as "Find the trip I went on," or "Please combine it with the trip I went on."

Based on the background information or object information of the content displayed on the display unit 180 as well as the information obtained from the user content, the controller 170 may process the response to utterances from the user such as "Find the trip I went on" and "Please combine it with the trip I went on."

The controller 170 may obtain user content associated with background information or object information of the content displayed on the display unit 180 from the user content stored inside the display device 100, before or after the user's utterances, similar to what is described with reference to FIGS. 5 to 9.

In addition, the controller 170 may obtain user content associated with background information or object information of the content displayed on the display unit 180 from an external server that may be connected to the display device 100, before or after the user's utterances, similar to what is described with reference to FIGS. 5 to 9.

In addition, the controller 170 may obtain user content associated with background information or object information of the content displayed on the display unit 180 from social networking services such as Instagram and Facebook, before or after the user's utterances, similar to what is described with reference to FIGS. 5 to 9.

According to an embodiment of the present disclosure, the display device 100 may further include an artificial intelligence (AI) server that obtains user content.

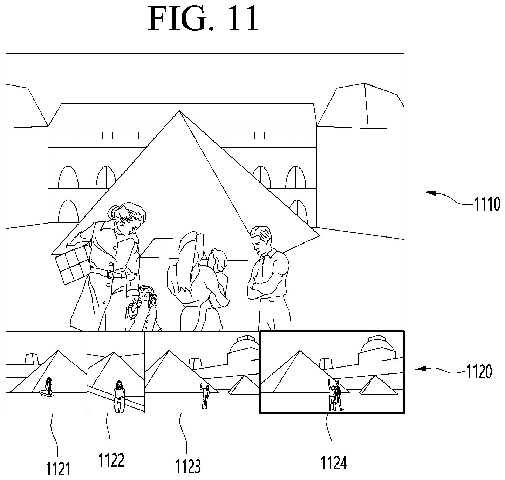

For example, when the broadcast content shown in Fig. 10 is displayed on the display unit 180, the controller 170 may display the obtained user content on the display unit 180, as shown in Fig. 11, when the controller recognizes that there is an utterance such as "Find my memories" or "Please combine it with the trip I went on" from the user.

The display unit 180 may include a first area 1110 and a second area 1120. For example, broadcast content shown in Fig. 10 may be displayed in the first area 1110, and obtained user content may be displayed in the second area 1120.

The size of the first area 1110 and the size of the second area 1120 may be set differently. A plurality of obtained user contents 1121, 1122, 1123, and 1124 may be displayed in the second area 1120.

For example, from the image 1001 of broadcast content shown in Fig. 10, the controller 170 may obtain background information or object information such as "France," "Paris," and "Louvre Museum."

The controller 170 may obtain user content associated with background information or object information such as "France", "Paris", and "Louvre Museum", when the controller recognizes that there is an utterance such as "Find my memories" or "Please combine it with the trip I went on" from the user. The controller 170 may assign a matching score indicating the degree of association with broadcast content to the obtained user content.

The controller 170 may display a plurality of user contents 1121, 1122, 1123, and 1124 obtained through this process on the second area 1120 of the display unit 180. For example, the controller 170 may display user content with a high matching score first on the display unit 180.

For example, the controller 170 may output obtained user content 1121, 1122, 1123, 1124 as shown in Fig. 11 with responses such as "I'll show you photos of my trip to Paris last summer," and "I'll show you photos of my trip to the Louvre Museum", when the controller recognizes that there is an utterance such as "Find my memories" or "Please combine it with the trip I went on" from the user.

Accordingly, users will be able to view photos taken in Paris or the Louvre Museum last summer. As an example, a user may be able to view user content that includes the Louvre Museum in Paris as a background. Users will be able to view their travel photos or videos taken at the Louvre Museum.

According to various embodiments of the present disclosure, a new user experience may be provided by obtaining and displaying user content associated with broadcast content.

According to various embodiments of the present disclosure, when a place he has traveled displays, a delicious meal ate displays, or a memory comes to mind, while the user is watching broadcast content, the controller 170 outputs the user content in connection with the broadcast content, and thus the user may have a new experience that may recall the user's good memories while watching the user content.

According to various embodiments of the present disclosure, when a specific area is recognized in broadcast content including a movie or broadcast program displayed on the display unit 180, the controller 170 may obtain user content associated with a specific area through the user's photo or a social networking service such as Instagram and may display them together by recalling nostalgic photos or videos obtained while displaying broadcast content including a movie or broadcast program.

The controller 170 may display broadcast content and obtained user content together on the display unit 180. Additionally, the controller 170 may not display broadcast content on the display unit 180 but only display obtained user content.

When specific user content is selected by the user, the controller 170 may enlarge and display the selected user content. The user may select specific user content by utterance or through the remote control device 200.

For example, when the first user content 1121 is selected by the user, the controller 170 may display the first user content 1121 on the entire area of the display unit 180. Additionally, when the first user content 1121 is selected by the user, the controller 170 may display the broadcast content by enlarging the size of the first user content 1121.

According to various embodiments of the present disclosure, the controller 170 may combine broadcast content displayed in the first area 1110 and user content displayed in the second area 1120.

The controller 170 may combine an object or background obtained from broadcast content and an object or background obtained from user content. The controller 170 may combine at least one object or background obtained from broadcast content and at least one object or background obtained from user content.

For example, when the controller 170 recognizes utterance of "combine it with my photo" from the user, the controller may combine broadcast content displayed in the first area 1110 and the fourth user content 1224 displayed in the second area 1120.

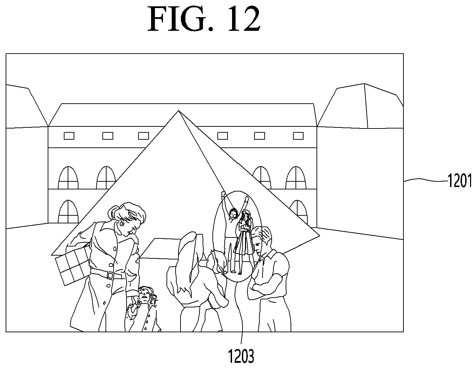

As shown in Fig. 12, the controller 170 may obtain an object from the fourth user content 1124 and combine the obtained object into broadcast content. The combined image 1201 shown in Fig. 12 may include an object image 1203 obtained from the fourth user content 1124. The controller 170 may combine broadcast content and user content and display the combined image or the combined video on the display unit 180.

Additionally, the controller 170 may store the combined image 1201 or the combined video shown in Fig. 12. The controller 170 may store the combined image 1201 or the combined video in the display device 100. The controller 170 may store the combined image 1201 or a combined video on an external server connected to the display device 100.

Accordingly, users may create memories as if they were traveling to the Louvre Museum with actors who appeared in movies displayed in broadcast content. According to various embodiments of the present disclosure, the controller 170 can provide a new user experience by obtaining user content associated with broadcast content, combining the broadcast content and user content, and displaying it.

Meanwhile, in the embodiment described with reference to Figs. 5 to 12, the controller 170 automatically learns the object or background information of the user content even without a request from the user, and when the controller 170 determines that the broadcast content associated with the user content are displayed, the controller 170 may be implemented to automatically display associated user content. The controller 170 may display broadcast content and user content associated with the broadcast content on the display unit 180.

According to the embodiment, even without the user's request, when the controller 170 automatically learns the user's memories (albums, Instagram, videos, or the like) and thus determines that the background of the broadcast content currently displayed on the display unit 180 matches the location of the user's memories, broadcast content and user content may be automatically displayed.

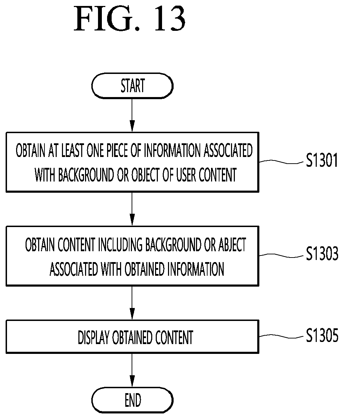

Fig. 13 is a flowchart illustrating another example of a method of driving a display device according to an embodiment of the present disclosure.

The display device 100 according to an embodiment of the present disclosure may include a controller 170 and a display unit 180.

The display unit 180 may display user content. For example, the display unit 180 may display at least one of user content including a photo or a video. The display unit 180 may display user content through a web application in a networking environment.

User content may include at least one of content stored by the user, content created by the user, or content stored as an object by the user. User content may include at least one of photos, videos, or schedule information.

User content may be stored in the display device 100. The display device 100 may include a database in which user content is stored. User content may be obtained from the memory or database of the display device 100.

User content may be obtained from an external server that may be connected to the display device 100. User content may be obtained from social networking services such as Instagram and Facebook.

The controller 170 may obtain at least one piece of information associated with the background or object of user content displayed on the display unit 180 (S1301).

The controller 170 may obtain the background of the user content displayed on the display unit 180 and obtain information associated with the background.

Information associated with the background of user content may be obtained from image recognition of user content or meta information of user content. Information associated with the background of the user content may include information such as the region where the user content was filmed (country, city, location information, coordinate information, or the like), the location where the user content was filmed (tourist attractions, restaurants, cafes, parks, schools, museums, or the like), and the time the user content was filmed.

The controller 170 may obtain an object of user content displayed on the display unit 180 and obtain information associated with the object.

Information associated with objects of user content may be obtained from image recognition of user content or meta information of user content. Information associated with the objects of the user content may include information such as person included in the user content (users, actors, celebrities, or the like), animals included in the user content, plants included in the user content, food included in the user content, and sculptures included in the user content, buildings included in the user content, and matters included in the user content.

The controller 170 may obtain information associated with the background of the user content or information associated with the object of the user content in real time for the user content displayed on the display unit 180. When the background of user content displayed on the display unit 180 is changed, the controller 170 may obtain information associated with the new background in real time without a user's request. When the object of user content displayed on the display unit 180 is changed, the controller 170 may obtain information associated with the new object in real time without a user's request.

Additionally, the controller 170 may obtain information associated with the background of the user content displayed on the display unit 180 or information associated with the object of the user content at the user's request. For example, the controller 170 may recognize a user's utterance and obtain information associated with the background of the user content displayed on the display unit 180 or the object of the user content.

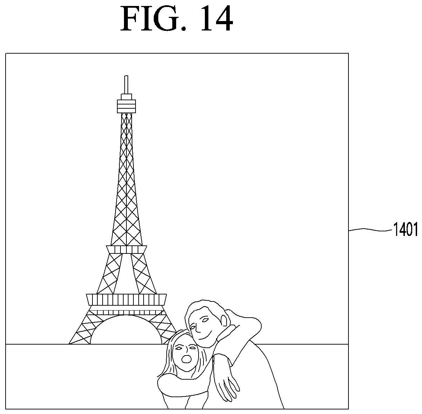

For example, user content including the image 1401 shown in Fig. 14 may be displayed on the display unit 180. The image 1401 shown in Fig. 14 is explained as an example of a part of user content filmed against the background of the Eiffel Tower in Paris, France.

In the user content shown in Fig. 14, the controller 170 may obtain background information such as "France" and "Paris." The controller 170 may obtain object information such as "user", "tower", or "Eiffel Tower".

According to an embodiment of the present disclosure, the controller 170 may obtain content including a background associated with the obtained information or content including an object associated with the obtained information (S1303).

Here, content may represent a comprehensive concept of content that further includes not only user content but also broadcast content.

As an example, the controller 170 may obtain content including a background associated with background information obtained from user content displayed on the display unit 180. The controller 170 may obtain content including an object associated with object information obtained from user content displayed on the display unit 180.

The obtained content may include at least one of broadcast content including photos, movies, or broadcast programs. The obtained content may include content provided through a broadcast program. The obtained content may include content provided through a web application. The obtained content may include user content stored by the user, created by the user, or stored as an object by the user.

The obtained content may be obtained from content stored in the display device 100. The display device 100 may include a database in which content is stored. The obtained content may be obtained from the internal memory or database of the display device 100.

The obtained content may be obtained from an external server that may be connected to the display device 100. Obtained content may be obtained from social networking services such as Instagram and Facebook.

The controller 170 may obtain content in real time based on background information or object information obtained from user content displayed on the display unit 180.

Based on the background information of the obtained user content, the controller 170 may obtain content including a background associated with the obtained background information in real time, even without a user's request, based on the object information of the obtained user content, the controller 170 may obtain content including an object associated with the obtained object information in real time, even without a user's request.

Additionally, the controller 170 may obtain content including a background associated with the obtained background information based on the background information of the user content obtained at the user's request. The controller 170 may obtain content including an object associated with the obtained object information based on the object information of the user content obtained at the user's request.

For example, the controller 170 recognizes a user's utterance, and may obtain content that includes a background associated with the background information of the user content output on the display unit 180 or an object associated with the object information of the user content output on the display unit 180.

Broadcast content or user content associated with background information or object information of user content may be obtained using an artificial intelligence server, similar to what was described above.

Since the method of obtaining similar broadcast content or similar user content is known to those skilled in the art to which the present disclosure pertains, a detailed description thereof will be omitted here.

According to an embodiment, the controller 170 may display the obtained content on the display unit 180 (S1305).

For example, when user content including the image 1401 shown in Fig. 14 is displayed on the display unit 180, there may be utterances from the user such as "Where is it?", "When did I go there?", and "Find my memories".

The controller 170 may recognize the user's utterance and perform response processing to the user's request. The controller 170 may process a response with at least one of an audio signal or a subtitle signal.

For example, when the controller 170 recognizes the utterance of "Where is it?" from the user, it may process responses such as "This is Paris, France" or "This is the Eiffel Tower in Paris."

After recognizing the user's utterance, the controller 170 may obtain background information or object information of user content displayed on the display unit 180. For example, the controller 170 may process a response such as "This is Paris, France" or "This is the Eiffel Tower in Paris" based on the background information or object information of the user content displayed on the display unit 180 as at least one of an audio signal or a subtitle signal.

Additionally, the controller 170 may obtain background information or object information of user content displayed on the display unit 180 in advance before the user's utterance. In this way, when the background information or object information of the user content is obtained in advance, the controller 170 may recognize the user's utterance and respond more quickly and accurately to the user request.

For example, when the controller 170 recognizes the utterance of "When did I go there?" from the user, the controller 170 may obtain background information or object information of user content displayed on the display unit 180.

The controller 170 may process responses such as "I went last summer" or "I went to Paris last summer" based on meta information of user content or information about the user's schedule. The response of the controller 170 may be processed as at least one of an audio signal or a subtitle signal.

The controller 170 may obtain content associated with background information or object information of user content displayed on the display unit 180 from the memory or database of the display device 100 before or after the user's utterance, similar to what is described with reference to FIGS. 5 to 12.

In addition, the controller 170 may obtain content associated with background information or object information of user content displayed on the display unit 180 from an external server that may be connected to the display device 100 before or after the user's utterance, similar to what is described with reference to FIGS. 5 to 12.

In addition, the controller 170 displays on the display unit 180 from social networking services such as Instagram and Facebook before or after the user speaks, similar to what is described with reference to FIGS. 5 to 12. Content associated with background information or object information of user content can be obtained.

According to an embodiment of the present disclosure, the display device 100 may further include an artificial intelligence (Al) server that extracts or obtains user content and content associated with the user content. The controller 170 may receive user content or content associated with user content from an artificial intelligence server. Additionally, the controller 170 may directly extract or obtain user content and content associated with the user content.

The artificial intelligence server may be provided outside the display device 100 and may be connected to the display device 100 through networking or the like. The artificial intelligence server may obtain user content and content associated with the user content from a database provided in the display device 100 before or after the user's utterance. The artificial intelligence server may obtain user content and content associated with the user content from an external server that may be connected to the display device 100 before or after the user's utterance. The artificial intelligence server may obtain user content and content associated with the user content from social networking services such as Instagram and Facebook before or after the user's utterance.

The artificial intelligence server may extract or obtain user content and classify the user content into various background items based on the background information of the obtained user content. Based on the content included in the user content, one user content may be classified to belong to a plurality of background items.

The artificial intelligence server may obtain user content and classify the user content into various object items based on the object information of the obtained user content. Based on the content included in the user content, one user content may be classified to belong to a plurality of object items. The artificial intelligence server may classify user content into various items through learning about user content.

According to an embodiment, when the artificial intelligence server obtains and classifies user content before the user's utterance, the controller 170 may quickly and accurately respond to the user's request. When the artificial intelligence server obtains and classifies user content and content associated with the user content, for example, broadcast content, before the user's utterance, the controller 170 may quickly and accurately respond to the user's request.

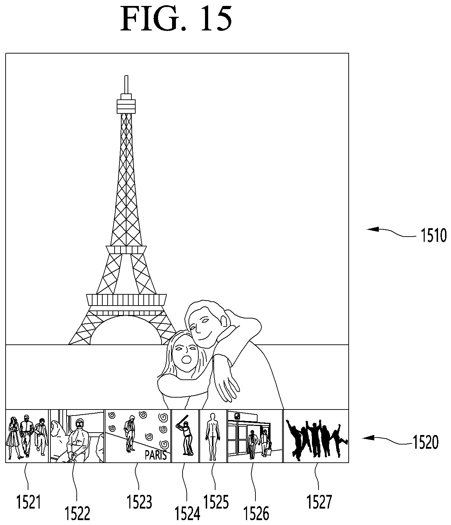

As an example, when the controller 170 recognizes that there is an utterance of "Find a Paris-related movie" from the user when the user content shown in Fig. 14 is displayed on the display unit 180, as shown in Fig. 15, the controller 170 may display the obtained content on the display unit 180.

The display unit 180 may include a first area 1510 and a second area 1520. For example, the user content shown in Fig. 14 may be displayed in the first area 1510, and the obtained content may be displayed in the second area 1520. The obtained content may be at least one of broadcast content including photos, movies, or broadcast programs.

The size of the first area 1510 and the size of the second area 1520 may be set differently. A plurality of obtained contents 1521, 1522, 1523, 1524, 1525, 1526, and 1527 may be displayed in the second area 1520.

Although Fig. 15 shows a case where 7 contents are displayed, less than 7 contents may be displayed, or 8 or more contents may be displayed. In addition, when the number of obtained contents is large, the display device 100 displays only a portion of the obtained contents, informs the user that there is more obtained contents through a scroll button or the like, and may request the user to select content to be displayed.

According to various embodiments of the present disclosure, the controller 170 may analyze user content displayed on the display unit 180 even without a user's request, and display associated broadcast content based on background information or object information obtained from the user content.

As an example, from the image 1401 of user content shown in Fig. 14, the controller 170 may obtain background information such as "France", "Paris", or the like. The controller 170 may obtain object information such as "tower" or "Eiffel Tower."

When the controller 170 recognizes the user's utterance "Find a movie related to my memories", or even without the user's request, the controller 170 may obtain content including a background associated with background information such as "France" and "Paris." The controller 170 may obtain content including objects associated with object information, such as "tower" and "Eiffel Tower." The controller 170 may obtain content that includes a background associated with background information such as "France" and "Paris" and also includes an object associated with object information such as "Tower" and "Eiffel Tower." The controller 170 may assign a matching score indicating the degree of association with user content to the obtained content.

The controller 170 may display a plurality of contents 1521, 1522, 1523, 1524, 1525, 1526, and 1527 obtained through this process on the second area 720 of the display unit 180. For example, the controller 170 may display user content with a high matching score first on the display unit 180.

For example, when the controller 170 recognizes the user's utterance "Find a movie related to my memories," the controller may output user content 1521, 1522, 1523, 1524, 1525, 1526, and 1527 obtained as shown in Fig. 15 with responses such as "I'll show you a movie about Paris."

Accordingly, users may receive recommendations for movies associated with Paris while viewing user content such as photos or videos taken in Paris. Users may view the movie by selecting the recommended movie. When a selection of content obtained from the user is input, the controller 170 may display the corresponding content on the display unit 180.

According to various embodiments of the present disclosure, a new user experience may be provided by obtaining and displaying user content associated with broadcast content.

According to various embodiments of the present disclosure, when a place he has traveled displays, a delicious meal ate displays, or a memory comes to mind, while the user is watching user content, the controller 170 outputs movies, the broadcast content, or the like associated with the user content, and thus the user may have a new experience that may recall the user's good memories.

According to various embodiments of the present disclosure, when a specific area is recognized in the user content displayed on the display unit 180, the controller 170 may obtain the user content associated with the specific area through the user's photo or a social networking service such as Instagram and may display them together by recalling nostalgic photos or videos obtained while displaying the screen of a movie or broadcast program.

The controller 170 may display both user content and obtained broadcast content on the display unit 180. Additionally, the controller 170 may display only obtained broadcast content without displaying user content on the display unit 180.

For example, when a user selects specific broadcast content, the controller 170 may enlarge and display the selected broadcast content. The user may select specific broadcast content by utterances or through the remote control device 200.

For example, when the first broadcast content 1521 is selected by the user, the controller 170 may display the first broadcast content 1521 on the entire area of the display unit 180. Additionally, when the first broadcast content 1521 is selected by the user, the controller 170 may display the user content and enlarge the size of the first user content 1521.

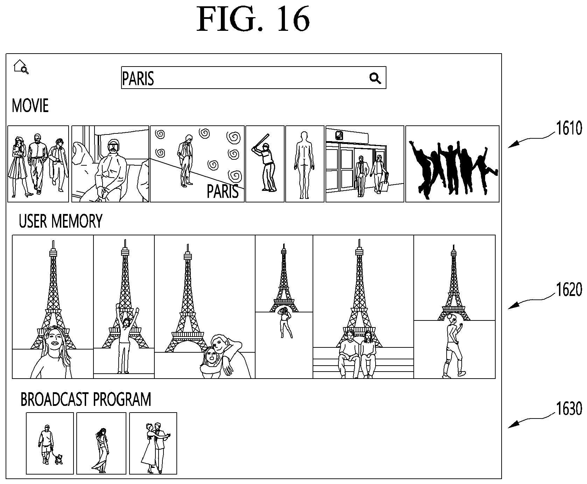

According to an embodiment of the present disclosure, according to a user request, as shown in Fig. 16, the controller 170 may display movie contents associated with user content in the first area 1610, display other user content associated with the user content in the second area 1620, and display other broadcast content associated with the user content in the third area 1630.

As an example, the controller 170 may obtain information associated with the background or object of the user content shown in Fig. 14, obtain other user content including the background or object associated with the obtained information, and display the user content in the second area 1620.

User content displayed in the second area 1620 may include at least one of content stored by the user, content created by the user, or content stored by the user as an object.

When the user selects specific content among the content shown in Fig. 16, the controller 170 may display the corresponding content on the display unit 180.

Additionally, the controller 170 may combine user content and obtained broadcast content, similar to what is described with reference to FIGS. 5 to 12. The controller 170 may combine user content and obtained broadcast content and display them on the display unit 180. The controller 170 may store combined content.

As an example, the controller 170 may obtain an object included in user content, combine the obtained object into broadcast content, and display it on the display unit 180.

According to various embodiments of the present disclosure, the display device 100 may obtain background information or object information of content displayed on the display unit 180 and obtain a list of virtual experience platforms that provide virtual experiences for places associated with the content. The display device 100 may connect to a virtual experience platform to provide a virtual experience environment to the user. A user may use the display device 100 to have a virtual experience on a virtual experience platform through a virtual character or avatar.

For example, when the image 1001 of the broadcast content shown in Fig. 10 is displayed on the display unit 180, the controller 170 may determine from the background information or object information of the broadcast content that the image is a scene from "Midnight in Paris" filmed in front of the "Louvre Museum".

The controller 170 may obtain a list of virtual experience platforms that provide virtual experiences for places associated with background information or places associated with object information and display the list on the display unit 180.

As an example, the virtual experience platform may be provided in the form of a metaverse platform such as ZEPETO, ifland, and Gather.town.

The controller 170 may display on the display unit 180 a list of virtual experience platforms that provide virtual experiences for, for example, "Louvre Museum" or "Paris."

The controller 170 may provide a virtual experience environment to the user by connecting to the virtual experience platform at the user's request. Alternatively, even without a user's request, the controller 170 may connect to at least one virtual experience platform among the obtained virtual experience platforms and inquire whether the user wants to enter the virtual experience location.

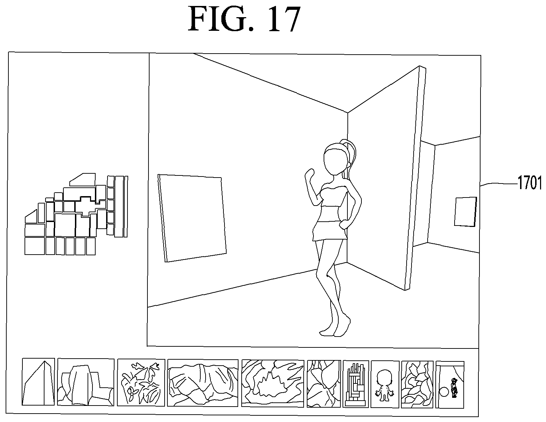

Using the display device 100, a user may have a virtual experience on a virtual experience platform through a virtual character or avatar, as shown in Fig. 17. Fig. 17 shows an image 1701 of an example in which a user has a virtual experience through an avatar on a virtual experience platform.

For example, when the image 1401 of the user content shown in Fig. 14 is displayed on the display unit 180, the controller 170 may determine that the image was filmed in front of the "Paris Eiffel Tower" from the background information or object information of the user content.

The controller 170 may obtain a list of virtual experience platforms that provide virtual experiences for places associated with background information or places associated with object information and display the list on the display unit 180.

The controller 170 may display on display unit 180 a list of virtual experience platforms that provide virtual experiences for, for example, "Louvre Museum," "Paris," "Eiffel Tower", or the like.

The controller 170 may provide a virtual experience environment to the user by connecting to the virtual experience platform at the user's request. Alternatively, even without a user's request, the controller 170 may connect to at least one virtual experience platform among the obtained virtual experience platforms and inquire whether the user wants to enter the virtual experience location.

Using the display device 100, a user may have a virtual experience on a virtual experience platform through a virtual character or avatar, as shown in Fig. 17. Fig. 17 shows an image 1701 of an example in which a user has a virtual experience through an avatar on a virtual experience platform. According to an embodiment of the present disclosure, a user avatar of a virtual experience platform may be created using a user object of user content.

According to an embodiment of the present disclosure, the above-described method may be implemented as processor-readable code on a program-recorded medium. Examples of media that the processor may read include ROM, RAM, CD-ROM, magnetic tape, floppy disk, and optical data storage devices.

The display device described above is not limited to the configuration and method of the above-described embodiments, and the embodiments may be configured by selectively combining all or part of each embodiment so that various modifications may be made.

## Claims

1. A display device comprising:
a display unit configured to display first content; and
a controller configured to obtain at least one first information associated with a background or object of the first content displayed on the display unit, obtain first user content including a background or object associated with the first information, and display the obtained first user content on the display unit.

2. The display device of claim 1,
wherein the first user content includes at least one of content stored by the user, content created by the user, or content stored by the user as an object.

3. The display device of claim 1,
wherein the first user content includes at least one of a photo, a video, or schedule information.

4. The display device of claim 1, further comprising:
a database storing the first user content.

5. The display device of claim 1,
wherein the display unit includes a first area and a second area,
wherein the first content is displayed in the first area, and
wherein the first user content is displayed in the second area.

6. The display device of claim 1,
wherein the first content includes at least one of broadcast content including a photo, a movie, or a broadcast program.

7. The display device of claim 1,
wherein the first information associated with the background or object of the first content includes at least one of area information included in the first content, building information included in the first content, food information included in the first content, matter information including in the first content, or person information included in the first content.

8. The display device of claim 1,
wherein the controller combines the first content and the first user content and displays the combined content on the display unit.

9. The display device of claim 1,
wherein the controller obtains a first object included in the first user content, combines the first object into the first content, and displays the combined first object and the first content on the display unit.

10. The display device of claim 9,
wherein the controller stores content in which the first object and the first content are combined.

11. The display device of claim 1,
wherein the controller obtains background information of the first content and obtains and provides a list of virtual experience platforms that provide virtual experiences of places associated with the background information.

12. The display device of claim 11,
wherein the controller connects to at least one virtual experience platform among the list of virtual experience platforms to provide a virtual experience environment to the user.

13. The display device of claim 1,
wherein the controller obtains at least one second information associated with a background or object of second user content, obtains second content including a background or object associated with the second information, and displays the second content on the display unit.

14. The display device of claim 13,
wherein the second content includes at least one of broadcast content including a photo, a movie, or a broadcast program.

15. The display device of claim 13,
wherein the controller obtains third user content including a background or object associated with the second information and displays the third user content on the display unit.

16. The display device of claim 15,
wherein the third content includes at least one of content stored by the user, content created by the user, or content stored as an object by the user.

17. The display device of claim 13,
wherein the controller combines the second content and the second user content and displays the combined second content and second user content on the display unit.

18. The display device of claim 13,
wherein the controller obtains a second object included in the second user content, combines the second object into the second content, and displays the combined second object and second content on the display unit.

19. The display device of claim 18,
wherein the controller stores content in which the second object and the second content are combined.

20. The display device of claim 13,
wherein the controller obtains background information of the second content and connects to a virtual experience platform that provides a virtual experience of a place associated with the background information to provide a virtual experience environment to the user.
